# EUROPEAN PATENT APPLICATION

(11) **EP 3 291 136 A1**
(43) Date of publication of application: **07.03.2018**
(21) Application number: 17187266.6
(22) Date of filing: 22.08.2017
(51) Int. Cl.: G06K 9/00, B60W 30/18, G08G 1/16, G05D 1/02, G01S 17/02, G01S 17/93, G01S 13/86, G01S 13/93

(54) **AUTOMATED VEHICLE LANE CHANGE CONTROL SYSTEM**

(30) Priority: 06.09.2016 US 201615257081
(71) Applicant: Delphi Technologies, Inc., Troy, MI 48007-5052 (US)
(72) Inventor: KRISHNA PRASAD, Premchand, Westfield, Indiana 46074 (US); CHIA, Michael I., Cicero, Indiana 46034 (US); SAMIEI, Ehsan, Kokomo, Indiana 46902 (US)
(74) Representative: Robert, Vincent

(57) **Abstract**

A lane-change system (10) suitable for use on an automated-vehicle includes a camera (20), a ranging-device (30), and a controller (46). The camera (20) is used to detect an image (22) of a lane-marking (24) on a roadway (26) traveled by a host-vehicle (12). The ranging-device (30) is used to determine a distance (32) and a direction (34) from the host-vehicle (12) to an other-vehicle (18) proximate to the host-vehicle (12). The controller (46) is in communication with the camera (20) and the ranging-device (30). The controller (46) is configured to control a lane-change (50) by the host-vehicle (12) in accordance with the image (22) when the lane-marking (24) is detected, and control the lane-change (50) in accordance with the distance (32) and the direction (34) to the other-vehicle (18) when the lane-marking (24) is not detected.

## Description

### TECHNICAL FIELD OF INVENTION

This disclosure generally relates to a lane-change system suitable for use on an automated-vehicle, and more particularly relates to a system that controls a host-vehicle in accordance with an image from a camera when a lane-marking is detected by the camera, and controls the host-vehicle accordance with a distance and a direction to an other-vehicle indicated by a ranging-device when the lane-marking is not detected.

### BACKGROUND OF INVENTION

It is known to configure (e.g. equip and program) an automated vehicle to control or steer the vehicle during a lane change using a camera detected lane-marking for guidance. However, it is expected that an unexpected disappearance of the lane-marking and/or an unexpected loss of camera function due to dirt or snow blocking the view of the camera, or equipment failure, may occur.

### SUMMARY OF THE INVENTION

Within the scope of autonomous vehicle control, there are multiple subfunctions, one of which is automatic lane change (ALC). ALC is an area where control algorithms are being developed to either change lanes automatically or change lanes based on a driver command. In either implementation, this task depends on lane data from sensors (including cameras) to initiate a lane change as well as complete the lane change maneuver. This lane data preferably comes from a camera. However, if while completing the maneuver, a system that operates a host-vehicle loses this lane information due to, for example, poor or non-existent lane marker data, the host-vehicle may steer along an uncertain path. The system described herein avoids such a situation.

To perform a successful lane change, the host-vehicle requires lane information for the present or departing lane and the targeted destination lane. This lane information is measured from an image obtained from a forward facing camera. The host-vehicle is also equipped with, for example, side radars and/or lidars for surround (i.e. 360 degree) object detection. In one scenario the host-vehicle is behind an other-vehicle, and the host-vehicle is making a lane change to pass the other-vehicle, but the targeted lane change destination region does not have properly or sufficiently indicated lane markings. This scenario is common on various roadways with left or right turn lanes, intersections, and/or any roadway with generally poor quality or poorly painted lane markers. In such scenarios with prior system the lane change maneuver once started cannot properly complete because lane information is unavailable in the destination lane. The system described herein uses surround sensor information from "360-sensors" (side radars, lidars or any ranging-sensor) to track other vehicular objects before the lane change maneuver is started. If the host-vehicle loses lane information during the lane change, the relative position, heading, and velocity data from these other vehicles can be used to complete the lane change maneuver safety. The detection information available from the 360-sensors may include velocity, heading, acceleration, etc. of the other vehicles, which can used by the host-vehicle to maintain a safe distance from adjacent vehicular objects until vision data again becomes available. Maintaining a steering heading parallel to the one or more instances of the other-vehicles provides the host-vehicle a way to maintain stability, and if necessary due to the continued unavailability of lane markers, to gracefully transfer or hand over control to the driver of the host-vehicle. By way of example, the technique can be equivalently viewed as maintaining steering trajectory with an offset or bias.

In accordance with one embodiment, a lane-change system suitable for use on an automated-vehicle is provided. The system includes a camera, a ranging-device, and a controller. The camera is used to detect an image of a lane-marking on a roadway traveled by a host-vehicle. The ranging-device is used to determine a distance and a direction from the host-vehicle to an other-vehicle proximate to the host-vehicle. The controller is in communication with the camera and the ranging-device. The controller is configured to control a lane-change by the host-vehicle in accordance with the image when the lane-marking is detected, and control the lane-change in accordance with the distance and the direction to the other-vehicle when the lane-marking is not detected.

The ranging-device may be one or more of an ultrasonic-transducer, a radar-unit, and a lidar-unit. The controller may be configured to prevent initiation of the lane-change when the lane-marking is not detected, and may complete the lane-change in accordance with the distance and the direction to the other-vehicle when the lane-marking disappears after the lane-change has been initiated. The controller may be configured to determine a travel-path of the other-vehicle based on the distance and the direction to the other-vehicle, and may control the host-vehicle during the lane-change into a parallel-path characterized as parallel to travel-path when the lane-marking disappears after the lane-change has been initiated. The image may indicate a lane-width of the roadway, and the parallel-path may be offset from the travel-path by the lane-width. The ranging-device may be further configure to detect a guard-rail adjacent to the roadway, and the controller may be configured to avoid the host-vehicle making contact with the guard-rail during the lane-change.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of a lane-change system in accordance with one embodiment; and
Fig. 2 is a traffic-scenario encountered by the system of Fig. 1 in accordance with one embodiment.

### DETAILED DESCRIPTION

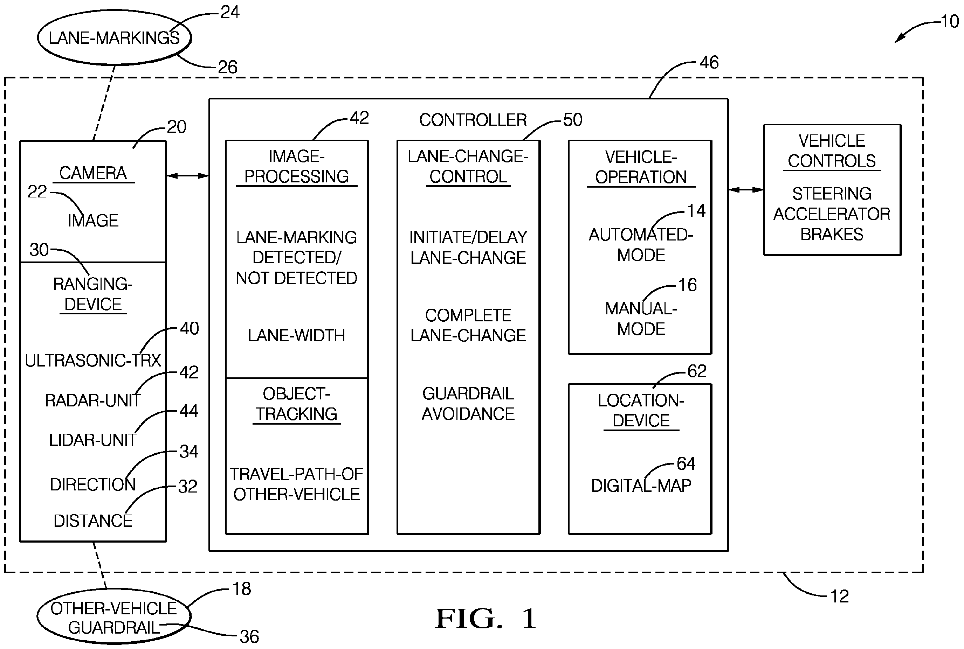

Fig. 1 illustrates a non-limiting example of a lane-change system 10, hereafter referred to as the system 10, which is suitable for use on an automated-vehicle, for example a host-vehicle 12. The examples presented herein are generally directed to instances when the host-vehicle 12 is being operated in an automated-mode 14, i.e. a fully autonomous mode, where a human operator (not shown) of the host-vehicle 12 may do little more than designate a destination in order to operate the host-vehicle 12. However, it is contemplated that the teachings presented herein are useful when the host-vehicle 12 is operated in a manual-mode 16 where the degree or level of automation may be little more than providing steering advice to the human operator who is generally in control of the steering, accelerator, and brakes of the host-vehicle 12. For example, the system 10 may merely assist the human operator as needed to change lanes and/or avoid interference and/or a collision with, for example, an other-vehicle 18.

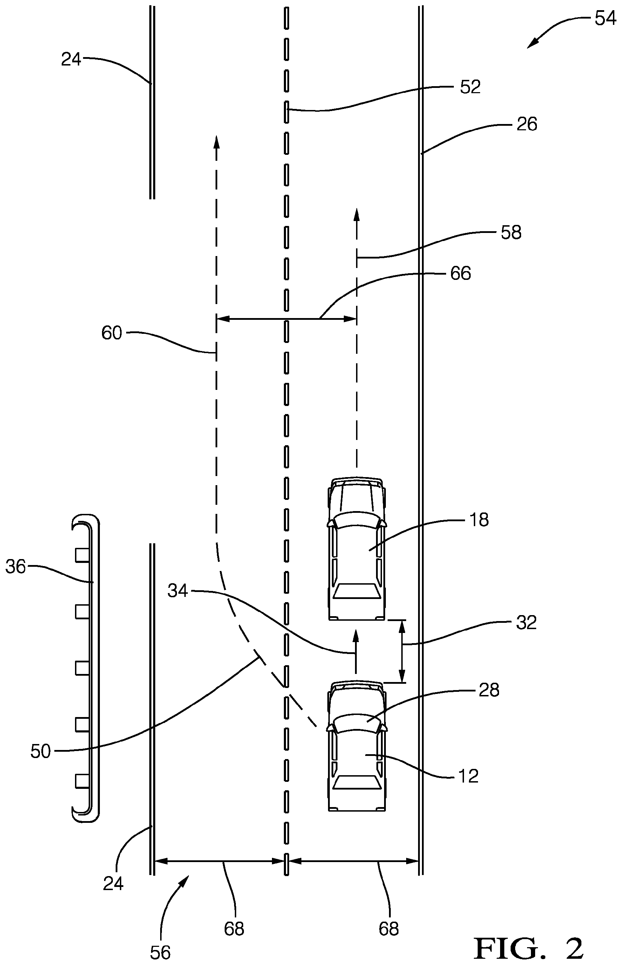

The system 10 includes a camera 20 (e.g. a video camera) used to detect an image 22 of a lane-marking 24 (see also Fig. 2) on a roadway 26 traveled by the host-vehicle 12. There are many examples of commercially available cameras suitable for use on the host-vehicle 12 for detecting the lane-marking 24, as will be recognized by those in the art. The camera 20 may be mounted, for example, behind the windshield 28 of the host-vehicle 12 so that windshield-wipers can be used to keep the view of the camera 20 clear. Alternatively, the camera 20 may be one of multiple cameras mounted at various strategic locations about the host-vehicle 12, for example at the corners of the body, or on the side-view mirrors of the host-vehicle 12. Multiple instances of the camera 20 at multiple strategic locations on the host-vehicle 12 can provide for a better image of the lane-marking 24 and/or other objects proximate to the host-vehicle 12 when the host-vehicle 12 is close behind the other-vehicle 18.

The system 10 also includes a ranging-device 30 used to determine a distance 32 and/or a direction 34 from the host-vehicle 12 to, for example, the other-vehicle 18, a guard-rail 36, or other object proximate to the host-vehicle12. Non-limiting examples of devices suitable to determine the distance 32 and/or the direction 34 to an object, and thereby form the ranging-device 30, include one or more instances of an ultrasonic-transducer 40, a radar-unit 42, and/or a lidar-unit 44, in any combination. As suggested above, the devices that form the ranging-device 30 and the one or more instances of the camera 20 may cooperate to provide the means for 360 degree (i.e. surround) detection around the host-vehicle 12.

The system 10 also includes a controller 46 in communication with the camera 20 and the ranging-device 30. The controller 46 may include a processor (not specifically shown) such as a microprocessor or other control circuitry such as analog and/or digital control circuitry including an application specific integrated circuit (ASIC) for processing data as should be evident to those in the art. The controller 46 may include memory (not specifically shown), including non-volatile memory, such as electrically erasable programmable read-only memory (EEPROM) for storing one or more routines, thresholds, and captured data. The one or more routines may be executed by the processor to perform steps for determining the relative position of the lane-marking 24 and the other-vehicle 18 based on signals received by the controller 46 from the camera 20 and the ranging-device 30 as described herein.

The controller 46 is in communication the vehicle-controls 48 of the host-vehicle 12 so the controller can operate or assist with operation of the steering, accelerator (accelerator pedal) and/or brakes (brake pedal) of the host-vehicle 12. The communication may be by way of wires via a vehicle-network, wireless communication, or other known means. In order enable particular aspects of the system 10, the controller 46 is programmed or configured to control a lane-change 50 by the host-vehicle 12 in accordance with the image 22 when the lane-marking 24 is detected, and control the lane-change 50 in accordance with the distance 32 and/or the direction 34 to the other-vehicle 18 when the lane-marking 24 is not detected. For example, if the lane-marking unexpectedly disappears from the image 22 after the lane-change 50 has been initiated, the controller 46 relies on information from the ranging-device 30 to operate (e.g. steer) the host-vehicle 12. Alternatively, or if information from the ranging-device is inadequate, the controller 46 may elect to switch into the manual-mode 16 to have the operator (not shown) of the host-vehicle 12 take control of the host-vehicle 12 until the lane-marking 24 is again detected. Further details of how the controller 46 controls the lane-change 50 when the lane-marking is not detected are given below.

However, a first step of preventing or avoiding the situation of having to rely on the ranging-device 30 to operate the host-vehicle 12 may be to prevent initiation of the lane-change 50 when the lane-marking 24 is not detected at the moment of initiation. That said, if the lane-change 50 has already been initiated, e.g. the host-vehicle 12 is straddling the dashed-line 52 (Fig. 2) of the roadway 26 at the instant the lane-marking 24 unexpectedly disappears, but there is sufficient information from the ranging-device 30, e.g. the other-vehicle 18 has been well tracked for at least several seconds, then the controller 46 may be configured to complete the lane-change 50 in accordance with the distance 32 and the direction 34 to the other-vehicle 18 when the lane-marking 24 disappears after the lane-change 50 has been initiated.

Fig. 2 illustrates a non-limiting example of a traffic-scenario 54 that the host-vehicle 12 may encounter where the host-vehicle 12 is traveling directly behind the other-vehicle 18, and the host-vehicle 12 is about to pass the other vehicle 18 using an adjacent-lane 56 of the roadway 26. By way of example and not limitation, in order to perform a passing maneuver, the controller 46 may be configured to project or determine a travel-path 58 of the other-vehicle 18 based on the distance 32 and the direction 34 to the other-vehicle 18. The controller 46 may also determine or estimate a present speed of the other-vehicle 18 based on a range-rate detected using the ranging-device 30 and the present speed of the host-vehicle 12.

In this example, the travel-path 58 is projected to be straight because the other-vehicle 18 has been traveling in a straight line for an extended period of time, e.g. more than twenty-five seconds (25s) for example. Alternatively or additionally, the controller 46 may be equipped with a location-device 62 such as a global-positioning-system (GPS) receiver, and have access to a digital-map 64 so that the future straight travel of the other-vehicle 18 may be more reliably projected. The controller 46 may then control the host-vehicle 12 during the lane-change 50 into a parallel-path 60 characterized as parallel to travel-path 58 when the lane-marking 24 disappears after the lane-change 50 has been initiated.

In this example the parallel-path 60 can be described as beside or offset from the travel-path 58, and is generally parallel to the travel-path 58. The system 10, or more specifically the controller 46, uses the other-vehicle 18 as a guide or reference to steer the host-vehicle 12 along the parallel-path 60 by maintaining an offset-distance 66 relative to the other-vehicle 18 and/or the travel-path 58 when the lane-marking 24 is unavailable for use. The offset-distance 66 may be calculated from the image 22 prior to the disappearance of the lane-marking 24, where the image 22 indicates a lane-width 68 of the roadway 26, e.g. the lane-width 68 of the adjacent-lane 56 and/or the lane traveled by the other-vehicle 18. Then the offset-distance 66 that the parallel-path 60 is offset from the travel-path 58 may be calculated based on the lane-width 68. Alternatively, the lane-width 68 may be based on data from the digital-map 64. It is contemplated that if the roadway 26 is curved, the travel-path 58 would become curved as the other-vehicle 18 turned to follow the curve, and the parallel-path 60 would be appropriately curved to maintain the offset-distance 66 through the curve.

It is further contemplated that the parallel-path 60 could be coincident with the travel-path 58, i.e. the same. For example, if the lane-change 50 was initiated, but the lane-marking 24 disappeared before the host-vehicle 12 had crossed the dashed-line 52, the controller 46 may be configured or programmed to abort the lane-change 50 and return to a location directly behind the other-vehicle 18 and thereby follow the travel-path 58 rather than move into the adjacent-lane 56.

In another embodiment of the system 10, the ranging-device30 may be used or further configure to detect a guard-rail 36 adjacent to the roadway 26, and the controller 46 may be configured to avoid an instance of the host-vehicle 12 making contact with the guard-rail 36 during the lane-change 50. For example, if the guard-rail 36 is too close to the dashed-line 52 (or a solid-line at the same location), e.g. less than three meters (3m), it may be an indication that what appears to be the adjacent-lane 56 is actually a shoulder of the roadway 26. It follows that the controller 46 would not initiate the lane-change 50.

Accordingly, a lane-change system (the system 10), a controller 46 for the system 10, and a method of operating the system 10 is provided. The system 10 overcomes problems that arise when the lane-marking 24 unexpectedly disappears due to, for example, construction, or age of the lane-marking 24.

While this invention has been described in terms of the preferred embodiments thereof, it is not intended to be so limited, but rather only to the extent set forth in the claims that follow.

## Claims

1. A lane-change system (10) suitable for use on an automated-vehicle, said system (10) comprising:
a camera (20) used to detect an image (22) of a lane-marking (24) on a roadway (26) traveled by a host-vehicle (12);
a ranging-device (30) used to determine a distance (32) and a direction (34) from the host-vehicle (12) to an other-vehicle (18) proximate to the host-vehicle (12);
a controller (46) in communication with the camera (20) and the ranging-device (30), said controller (46) configured to control a lane-change (50) by the host-vehicle (12) in accordance with the image (22) when the lane-marking (24) is detected, and control the lane-change (50) in accordance with the distance (32) and the direction (34) to the other-vehicle (18) when the lane-marking (24) is not detected.

2. The system (10) in accordance with claim 1, wherein the ranging-device (30) is one or more of an ultrasonic-transducer (40), a radar-unit (42), and a lidar-unit (44).

3. The system (10) according to any one of the preceding claims, wherein the controller (46) is configured to prevent initiation of the lane-change (50) when the lane-marking (24) is not detected, and complete the lane-change (50) in accordance with the distance (32) and the direction (34) to the other-vehicle (18) when the lane-marking (24) disappears after the lane-change (50) has been initiated.

4. The system (10) according to any one of the preceding claims, wherein the controller (46) is configured to determine a travel-path (58) of the other-vehicle (18) based on the distance (32) and the direction (34) to the other-vehicle (18), and control the host-vehicle (12) during the lane-change (50) into a parallel-path (60) characterized as parallel to travel-path (58) when the lane-marking (24) disappears after the lane-change (50) has been initiated.

5. The system (10) in accordance with claim 4, wherein the image (22) indicates a lane-width (68) of the roadway (26), and the parallel-path (60) is offset from the travel-path (58) by the lane-width (68).

6. The system (10) according to any one of the preceding claims, wherein the ranging-device (30) is further configure to detect a guard-rail (36) adjacent to the roadway (26), and the controller (46) is configured to avoid the host-vehicle (12) making contact with the guard-rail (36) during the lane-change (50).
